(19) **Europäisches Patentamt / European Patent Office / Office européen des brevets**

(11) **EP 1 726 604 B1**

(12) **EUROPEAN PATENT SPECIFICATION**

(45) Date of publication and mention
of the grant of the patent:
**14.01.2009 Bulletin 2009/03**

(51) Int Cl.:
***C08F 291/00*** (2006.01)     ***C09D 7/00*** (2006.01)

(21) Application number: **06010578.0**

(22) Date of filing: **23.05.2006**

(54) **Acrylic modified alkyl hybrid latexes, coating composition, method of increasing and adjusting the viscosity and substrate coated**

Acrylmodifizierte Hybrid-Alkydlatices, Beschichtungszusammensetzung, Verfahren zur Erhöhung und Anpassung der Viscositat und beschichtetes Substrat

Latex alkydiques hybrides modifies par un compose acrylique, composition de revêtement, procédé pour augmenter et ajuster la viscosité et substrat revêtu

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.05.2005 US 684456 P**
**15.03.2006 US 376605**

(43) Date of publication of application:
**29.11.2006 Bulletin 2006/48**

(73) Proprietor: **EASTMAN CHEMICAL COMPANY**
**Kingsport TN 37660 (US)**

(72) Inventors:
• **Shoaf, Glenn Lewis**
**Kingsport**
**Tennessee 37660 (US)**
• **Ollis, Gerald Wayne**
**Kingport**
**Tennessee 37664 (US)**

(74) Representative: **Best, Michael et al**
**Lederer & Keller**
**Patentanwälte**
**Prinzregentenstrasse 16**
**80538 München (DE)**

(56) References cited:
**EP-A- 0 555 903**          **EP-A- 0 608 020**
**US-A- 4 451 596**          **US-A- 4 464 524**
**US-A1- 2003 158 331**     **US-B1- 6 242 531**

• **S.T.WANG ET AL: "Emulsion an dMiniemulsion Copolymerization of Acrylic Monomers in the Presence of Alkyd Resin" JOURNAL OF APPLIED POLYMER SCIENCE, vol. 60, 1996, pages 2069-2076, XP002390768**

Remarks:
The file contains technical information submitted after the application was filed and not included in this specification

**Description**

The invention relates to alkyd/acrylic hybrid latex polymers, methods of making such polymers, and their use as viscosity modifiers in compositions such as coating compositions.

BACKGROUND OF THE INVENTION

Alkyd resins provide exceptional film-forming ability and ambient curing via autooxidative crosslinking of the alkyd film. Exceptional film-forming ability translates into high gloss, and autooxidative crosslinking enhances the resistance properties of the resulting coating. Due to the relatively high viscosity of these resins, paints formulated from these resins have desired flow and leveling properties that are not generally obtained when using a water-based latex resin.

However, traditional alkyd resins require high levels of organic solvent. Water-borne versions of these materials have therefore been developed having a relatively high level of acid groups which, when neutralized, render the polymer dispersible or reducible in water. Though these water-borne alkyds show promise, they are generally more costly than solvent-borne alkyds or alkyd-acrylics, they tend to dry or cure slowly, their ultimate hardness is lower than that obtained with many conventional acrylic latex systems, and they often must be diluted to low solids levels in order to deliver them in water.

Recently, hybrid latexes have been developed which combine the advantages of solvent-borne alkyds with those of styrene-acrylic or all-acrylic polymers. For example, hybrid resins based on solvent-based alkyds and acrylic or styrene-acrylic components have been developed in a latex form using a miniemulsion polymerization technique. This technique has been used to disperse relatively lipophilic resins in aqueous systems.

Further, incorporation of latent oxidatively-functional monomers (e.g. those having acetoacetoxy functionality or ethylenic unsaturation that survives polymerization) provides the capability of complementing/ amplifying the ambient oxidative crosslinking that typically occurs in alkyd coatings. However, the viscosity of these latex resins is relatively low, especially when compared to a solvent-based alkyd system, and they do not provide good flow and leveling characteristics when formulated into a paint, unless significant levels of thickener components are added. It would clearly be an advance in the art to obtain the favorable properties of hybrid resins, while providing improved viscosity properties, with the ability to modify the viscosity via conventional coatings additives, to suit the differing requirements of various paint formulations.

S.T.WANG ET AL: "Emulsion and Miniemulsion Copolymerization of Acrylic Monomers in the Presence of Alkyd Resin" JOURNAL OF APPLIED POLYMER SCIENCE, vol. 60, 1996, pages 2069-2076 discloses polymers which are produced by polymerization of acrylic monomers in the presence of an alkyd resin. The polymerization is carried out in miniemulsion wherein the particles exhibit a size of less than 300 nm.

U.S. Pat. No. 4,011,388 to Murphy et al. discloses aqueous emulsion polymers made by dissolving a polymer, such as a cellulosic compound, in a monomer mixture, and then polymerizing the monomer mixture via free radical emulsion polymerization. The monomer mixture having the polymer dissolved therein is preferably sheared prior to the emulsion polymerization step, and the resulting emulsion polymer product is said to be substantially homogeneous.

U.S. Pat. No. 4,451,596 to Wilk et al. discloses a method for preparing water-dilutable resin preparations for use in stove-drying lacquer systems.

In a first step, an aqueous dispersion of an alkyd resin is prepared, the alkyd resin having an acid value from about 5 to 40 and a hydroxyl number from about 150 to 300. In a subsequent step, monomers of acrylic acid derivatives or methacrylic acid derivatives are added to the aqueous dispersion and emulsion polymerized via free radical polymerization. The use of aqueous alkyd dispersions in the emulsion polymerization process is said to allow formulators to avoid using emulsifiers that adversely affect the water stability of the lacquer systems.

U.S. Pat. No. 4,504,609 to Kuwajima et al. discloses an aqueous coating composition comprising at least one aqueous resin and a component from water-insoluble resinous particles made from ethylenically unsaturated compounds. The aqueous resin can be an alkyd resin, and the water-insoluble resinous particles can be formed by emulsion polymerization.

U.S. Pat. Nos. 5,569,715 and 5,786,420 to Grandhee describe a process for forming a hydrophobically-modified core-shell emulsion polymer. According to the process, a hydrophobic polymer having an acid value from 0 to 7 mg KOH/g is combined with ethylenically unsaturated monomers, surfactant, and water and subjected to high stress techniques to form droplets or particles of the mixture. The monomers within these particles are then co-polymerized by a process of mini-emulsion polymerization to form the core polymer. A further monomer mixture, containing at least one hydrophilic monomer, is afterward polymerized in the presence of the core polymer to form a shell. The process is said to achieve a level of hydrophobicity in the core not attainable by merely varying the monomers used.

U.S. Pat. No. 5,686,518 to Fontenot et al. describes a stable monomer miniemulsion, characterized by small monomer droplet size, that is prepared and then polymerized to a polymer latex under free radical polymerization conditions. The monomer miniemulsion includes, in addition to water, a surfactant, a monomer or mixture of monomers, and one or more polymers that function as a polymeric co-surfactant. The polymer co-surfactant is present in the miniemulsion in an amount from about 0.5 to about 5 percent by weight, based on the combined weight of monomer and polymer.

U.S. Pat. No. 6,242,528 to Clark et al. discloses acrylic-modified waterborne alkyd dispersions prepared by an emulsion polymerization process in which a water-dispersible alkyd resin is dispersed in water, and at least one latent oxidatively-functional acrylic monomer is thereafter emulsion polymerized in the presence of the dispersed alkyd.

U.S. Pat. No. 6,262,149 to Clark et al. discloses acrylic-modified waterborne alkyd dispersions prepared by an emulsion polymerization process in which a water-dispersible alkyd resin having at least one pendant sulfonate functionality is dispersed in water, and at least one ethylenically unsaturated monomer is thereafter emulsion polymerized in the presence of the dispersed alkyd having pendant sulfonate functionality.

U.S. Pat. No. 6,333,378 to Clark et al. discloses acrylic-modified waterborne alkyd and uralkyd dispersions prepared by the polymerization of at least one latent oxidatively-functional acrylic monomer in the presence of a water-borne alkyd or uralkyd. The patent also discloses polymers prepared by shearing a miniemulsion based on a solvent-borne alkyd or uralkyd dissolved in at least one latent oxidatively-functional acrylic monomer, and thereafter emulsion polymerizing the miniemulsion.

U.S. Pat. No. 6,369,135 to Schork et al. discloses a miniemulsion polymerization process in which a solvent-borne alkyd resin is dissolved in a vinyl monomer or monomer mixture. This mixture is then dispersed under high shear conditions, in the presence of at least one surfactant and optionally a cosurfactant, into an emulsion. The emulsion is polymerized via free radical polymerization under conditions which favor nucleation of the monomer droplets. An advantage of the process disclosed is that a solvent-borne alkyd is thereby introduced into a waterborne coating system.

There remains a need in the art for hybrid latex resins having the favorable coating properties of known hybrid resins, while providing improved viscosity properties, with the ability to modify the viscosity via conventional coatings additives to suit the differing requirements of various paint formulations.

BRIEF SUMMARY OF THE INVENTION

We have unexpectedly discovered that when water-dispersible alkyd resins having significant acid functionality are dissolved in one or more ethylenically unsaturated monomers and subjected to mini-emulsion polymerizations, the resulting hybrid latex resins have suitable film forming properties, while providing the ability to change viscosity upon neutralization, the change in viscosity being a function of the amount of neutralizer provided. These alkyd resins may be used alone, or may be mixed with conventional emulsion polymers or water-dispersible alkyds, to provide a viscosity-adjustable system without the need for high levels of expensive thickening agents.

BRIEF DESCRIPTION OF THE DRAWINGS

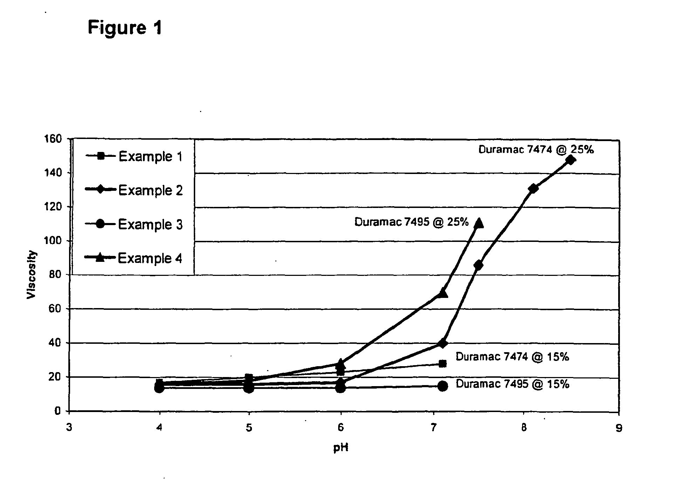

Fig. 1 is a plot of viscosity as a function of pH, demonstrating the effect of neutralization on the viscosity of systems made with two similar hybrid latexes of the invention at two different levels (shown are pH vs. viscosity profiles for alkyd-acrylic hybrids made with Duramac 7474 (AV=40) and Duramac 7495 (AV=35) at 15% and 25% levels (BOM + alkyd));

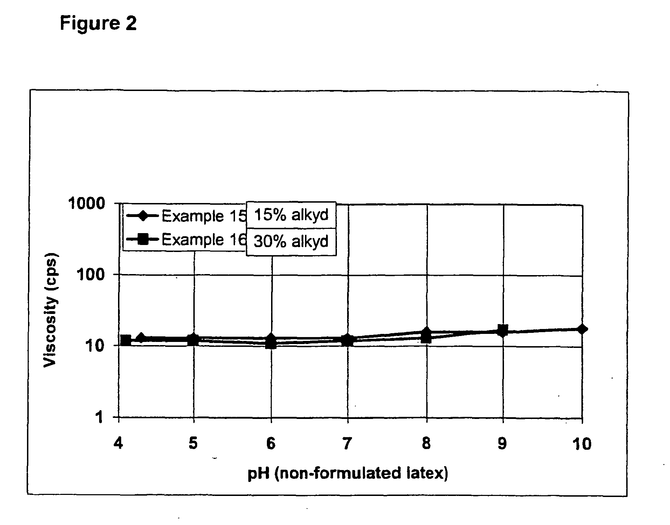

Fig. 2 is a plot of viscosity as a function of pH, demonstrating that neutralization of comparative systems made with two similar non-water-reducible alkyds added at two different levels does not appreciably increase viscosity (shown is the effect of pH on Viscosity for miniemulsion hybrids containing only a non-water-reducible alkyd - Aroplaz 6440 (AV=9) -);

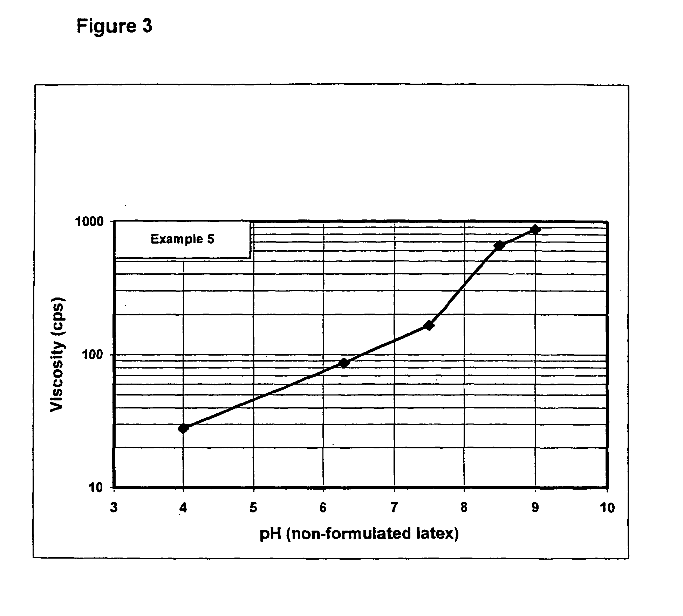

Fig. 3 is a plot of viscosity as a function of pH, demonstrating how the addition of a small amount of a hybrid latex according to the invention, in combination with a hybrid latex made using a non-water-reducible alkyd, leads to a significant viscosity response upon neutralization even though the AV/total polymer value is relatively low (3.5) (shown is the effect of pH on viscosity for a miniemulsion hybrid containing both low and high acid value alkyds Aroplaz 6440 (AV=9): Duramac 7474 (AV=40)=15%:5%);

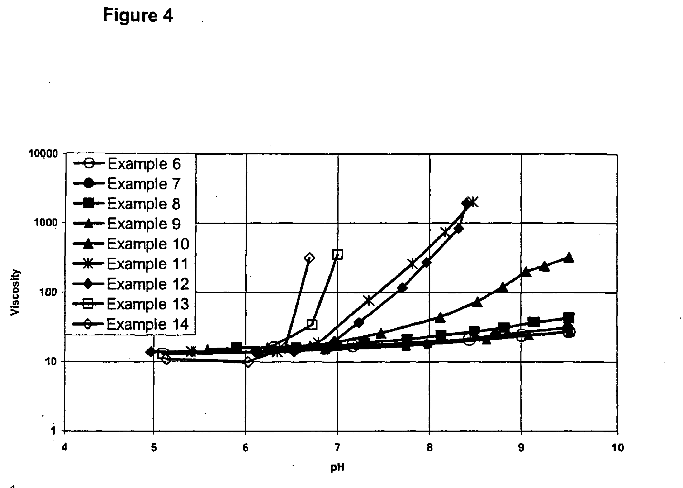

Fig. 4 is a plot of viscosity as a function of pH, demonstrating the effect of neutralization on the viscosity profiles for inventive hybrid latexes which incorporate various levels of a water-reducible alkyd and various monomer compositions (shown is the pH vs. viscosity profile for alkyd-acrylic hybrids with various alkyd levels and monomer compositions (CCP 6030 water-reducible alkyd - AV=40));

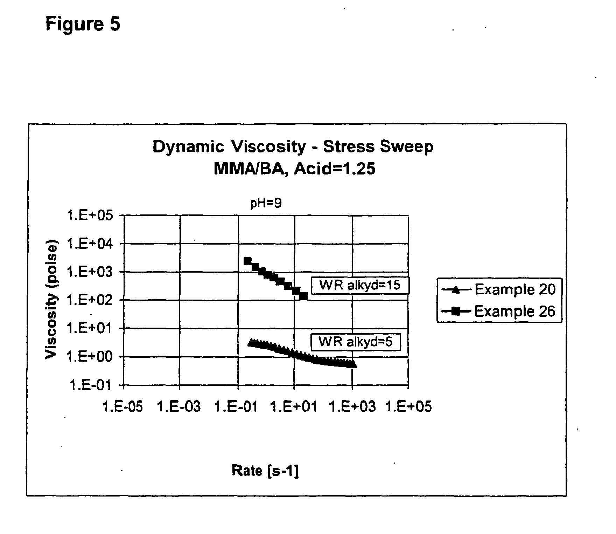

**Fig. 5** is a plot of viscosity as a function of rate of shear, demonstrating that the dynamic viscosity increases significantly as the level of an inventive hybrid latex is increased from a 5 wt.% level to a 15 wt.% level (shown is the effect of water-reducible alkyd on dynamic viscosity (MMA/BA, low acid monomer level));

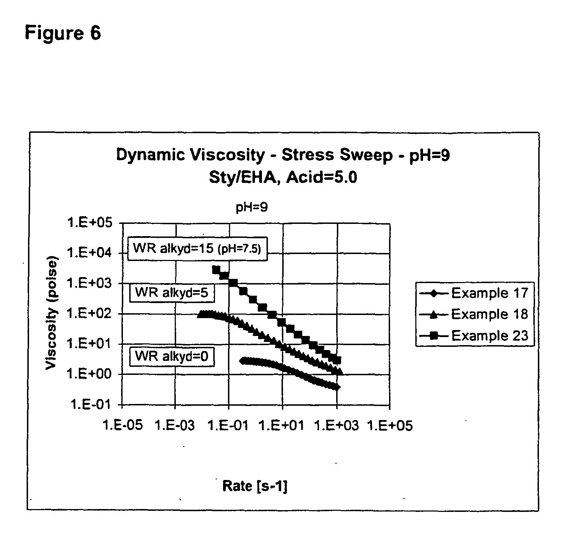

**Fig. 6** is a plot of viscosity as a function of rate of shear, demonstrating that the dynamic viscosity of a composition increases significantly as the level of an inventive hybrid latex increases from 0 wt.% to 5 wt.% and then to 15 wt. % (shown is the effect of water-reducible alkyd on dynamic viscosity (Sty/EHA, high acid monomer level));

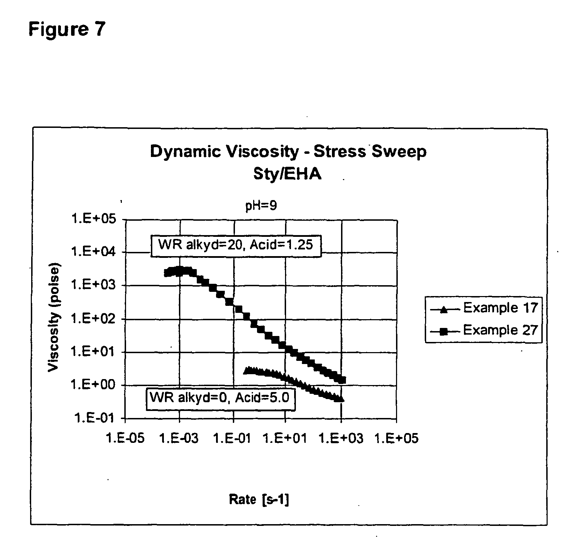

**Fig. 7** is a plot of viscosity as a function of rate of shear, demonstrating that the effect of the inventive hybrid latex is much greater than is the effect of increasing the amount of acid monomer, based on dynamic viscosity measurement (shown is the effect of water-reducible alkyd on dynamic viscosity (Sty/EHA, varying acid monomer level)).

DETAILED DESCRIPTION OF THE INVENTION

The present invention may be understood more readily by reference to the following detailed description of the invention, and to the Examples included therein.

Before the present compositions of matter and methods are disclosed and described, it is to be understood that this invention is not limited to specific synthetic methods or to particular formulations, except as indicated, and, as such, may vary from the disclosure. It is also to be understood that the terminology used is for the purpose of describing particular embodiments only, and is not intended to limit the scope of the invention.

The singular forms "a," "an," and "the" include plural referents, unless the context clearly dictates otherwise.

Optional or optionally means that the subsequently described event or circumstances may or may not occur. The description includes instances where the event or circumstance occurs, and instances where it does not occur.

Ranges may be expressed herein as from about one particular value, and/or to about another particular value. When such a range is expressed,
it is to be understood that another embodiment is from the one particular value and/or to the other particular value.

Throughout this application, where patents or publications are referenced, the disclosures of these references in their entireties are intended to be incorporated by reference into this application, in order to more fully describe the state of the art to which the invention pertains.

As used herein, mini-emulsion polymerization refers to a process in which a polymer, and especially an alkyd polymer, is dissolved in one or more monomers having ethylenic unsaturation to obtain an alkyd/monomer mixture; the alkyd/monomer mixture is dispersed in an aqueous medium to form a pre-emulsion; the pre-emulsion is subjected to high stress techniques to form small droplets having an average particle size from about 25 to about 500 nm, known herein as a mini-emulsion; and the mini-emulsion is then polymerized via free radical emulsion polymerization to obtain an acrylic/alkyd hybrid latex polymer.

In one aspect, the invention relates to a water-based acrylic-modified alkyd resin, described herein as a hybrid latex, made via a mini-emulsion polymerization. The hybrid latex results from the polymerization of a mini-emulsion of at least one ethylenically unsaturated monomer having dissolved therein a water-dispersible alkyd having significant acid functionality. The acid number, or acid value, of the alkyd is at least about 25 meq KOH/g, or at least about 30 meq KOH/g, or from about 30 to about 100 meq KOH/g, or from about 35 to about 75 meq KOH/g, as determined by a standard titration method, as described elsewhere herein. The units by which the acid value, or acid number, is expressed are understood to those skilled in the art, and may optionally be absent.

Narrower ranges of acid value that are especially suitable for various embodiments include an acid value from about 30 to about 50 meq KOH/g, or from about 35 to about 45 meq KOH/g.

In another aspect, the invention provides a method of adjusting the viscosity of a coating composition, that includes the steps of providing the composition with the hybrid latex of the invention, and afterward neutralizing the composition by providing one or more neutralizers in an amount sufficient to obtain the desired viscosity.

In another aspect, the invention provides an internal viscosity modifier that provides the capability of increasing the viscosity of the system by simple neutralization, a typical step used in making paints from latex resins. Moreover, incorporation of the water-reducible alkyd is accomplished without pre-dispersing the alkyd in water, such that a high solids, low viscosity (prior to neutralization) base resin dispersion is generated that, when neutralized, builds viscosity without the need for the addition of expensive thickening components.

As used herein, neutralization means the addition of a component (neutralizer) which reacts with the acid functionality on the alkyd and/or the acid functionality on the acrylic portion of the hybrid polymer such that the pH of the latex is increased.

As used herein, neutralizer means a basic component, such as sodium hydroxide, ammonium hydroxide, potassium hydroxide, an amine (without limitation as to the number of amine functional groups), a diamine, or a triamine, etc., that will react with a carboxyl functionality on the alkyd and/or acrylic polymer portion of the hybrid polymer. Examples of suitable neutralizers include, without limitation, dimethylamine, diethylamine, aminopropanol, ammonium hydroxide, aminomethylpropanol, and 2- amino-2-methyl-1-propanol.

The hybrid latexes of the invention provide the capability of adjusting the viscosity of the final latex system through standard neutralization techniques. The examples provided demonstrate the in-situ viscosity modification capability of these unique hybrid latex systems.

The hybrid latexes of the invention are stable when stored at temperatures at or moderately above room temperature. The hybrid latexes of the invention are capable of effecting crosslinking upon film formation. Such latex films or coatings may be cured at ambient temperature, thermally, or photochemically.

In the water-based latexes of the invention, the hybrid latex generally exists as particles dispersed in water. The particles may be generally spherical in shape. The particles may be structured or unstructured. Structured particles include, but are not limited to, core/shell particles and gradient particles. The core/shell polymer particles may also be prepared in a multilobe form, a peanut shell, an acorn form, or a raspberry form. The core portion may comprise, for example, from about 20 to about 80 wt.% of the total weight of the particle, and the shell portion may comprise from about 80 to about 20 wt.% of the total weight of the particle. The average particle size of the hybrid latex may range from about 25 to about 500 nm, or from about 50 to about 400 nm, or from about 100 to about 300 nm.

The glass transition temperature (Tg) of the acrylic portion of the hybrid resin in accordance with the invention may be up to about 100°C. The glass transition temperature is preferably under 70°C where film formation of the latex at ambient temperature is desirable, or from about 20° to about 50 °C.

The alkyds useful according to the invention may thus be soluble in the monomer or monomers used, and may have an acid value of at least about 25. The alkyd may be dissolved in the monomer or monomer mixture, and the alkyd/ monomer mixture dispersed in a water/surfactant solution. This mixture may be sheared using a high-shear device to form droplets having an average particle size from about 25 to about 500 nm, thus obtaining a miniemulsion. The polymerization may take place as a single stage or a multi-stage feed. If a multi-stage feed is used, one or more stages may contain the water-reducible alkyd and one or more stages may contain any additional alkyd resins, or may contain no alkyd resin (only monomer), in which case shearing the monomer mixture of such additional stages to form a miniemulsion would not be required. Further, different alkyd resins may be used in the different stages. The acrylic portion of the hybrid latex may comprise a copolymer, prepared by copolymerizing more than one ethylenically unsaturated monomer.

The mini-emulsion hybrid latex polymers of the invention provide a coating resin having a low viscosity, for easy processing and handling, but increase in viscosity upon neutralization during the formulation phase so that high levels of viscosity modifiers are not necessary to achieve good flow and leveling characteristics when applying the paint.

According to the invention, stress or shear is applied to a mixture of surfactant, alkyd, one or more monomers, and water, by high stress techniques, to form the mini-emulsion. High stress techniques refer to techniques suitable to obtain droplets or particles having an average particle size of from about 25 nm to about 500 nm, or from about 50 to about 400 nm, or from about 100 to about 300 nm.

One method of providing high shear to form the particles is to use a MICROFLUIDIZER® emulsifier, available from Microfluidics Corporation in Newton, Mass. The device consists of a high pressure (up to 25,000 psi) pump and an interaction chamber where the emulsification takes place. Generally, the reaction mixture is passed through the emulsifier at least once, at a pressure between 5,000 and 15,000 psi. Multiple passes may be used to achieve a smaller average particle size or a narrower range of particle size distribution.

Stress may be described as force per unit area. Although the mechanism by which an emulsifier stresses a pre-emulsification mixture is not well understood, it is possible that stress is exerted in more than one manner. One manner in which stress is believed to be exerted is by shear, meaning that the force is such that one layer or plane moves parallel to an adjacent, parallel plane. Stress can also be exerted from all sides, as a bulk, compression stress. In such cases, stress can be exerted without any shear. A further manner of producing intense stress is by cavitation, which occurs when the pressure within a liquid is reduced enough to cause vaporization. The formation and collapse of the vapor bubbles occurs violently over a short period of time, producing intense stress. Although not intending to be bound by theory, it is possible that both shear and cavitation contribute to producing the stress which particulates the pre-emulsification mixture in such instances. As used herein, the term stress is intended to include any manner by which the desired miniemulsion is achieved.

Another way to obtain high shear in order to form a miniemulsion is by by the use of ultrasonic energy or sonication, for example with a Fisher 300 Watt Sonic dismembrator for about 5 minutes at about a 60 percent output (180 watts), with bulk mixing provided by a stirring bar. (The Fisher 300 Watt Sonic dismembrator is manufactured and distributed by Fisher Scientific Company, Pittsburgh, Pa.) Other high shear mixing equipment, e.g., a colloid mill or homogenizer, can be used if desired. (The sonic dismembrator herein described is suitable for laboratory scale. A colloid mill or homogenizer are suitable for production scale.) In general, any equipment capable of producing localized high shear along with moderate bulk mixing can be used.

Thus, under mini-emulsion polymerization conditions, as used herein, a water-dispersible alkyd is dissolved in at least one ethylenically unsaturated monomer, each as described herein. According to the invention, the alkyd is considered "dissolved" or soluble in the monomer if, after addition of the alkyd, a clear to slightly turbid solution mixture forms with no apparent phase separation upon standing (i.e. the solution appears substantially homogeneous). The resulting mixture is then dispersed in an aqueous medium to form a pre-emulsion. The aqueous medium may be any aqueous medium known in the art used in such polymerization conditions such as, for example, a water/surfactant solution. Examples of suitable surfactants include, but are not limited to, sodium dodecyl sulfate, TERGITOL 15S-40, AEROSOL OT-NV, and DOWFAX 2A1. Polymerizable surfactants may also be used. The pre-emulsion is then stressed or sheared using a high-shear device to form a mini-emulsion. Shearing the emulsion to form small droplets prior to polymerization is believed to cause the predominant nucleation site and subsequent polymerization to occur within the droplets. As a result, transport of the monomer from the droplets and precipitation of the solvent-borne alkyd is believed to be avoided. Droplets of the mini-emulsion typically range in size from about 25 to about 500 nm. The mini-emulsion may then be polymerized, as with conventional emulsion polymerization techniques for forming acrylic latexes.

Alternative modes of applying stress to the pre-emulsification mixture can be used, so long as sufficient stress is applied to achieve the requisite particle size distribution. For purposes of the present invention, the average droplet or particle size is typically from about 25 to about 500 nm, or from about 50 nm to about 400 nm, or from about 100 to about 300 nm. After polymerization, it is preferred that less than 20% of the polymer droplets or particles have a mean diameter greater than about 300 nm.

Dynamic viscosity measurements indicate that the hybrid latexes of the invention can provide an increase in viscosity upon neutralization of as much as three orders of magnitude, relative to systems without incorporation of these alkyds. The hybrid latexes of the invention can be formulated into a paint at low VOC due to the plasticization provided by the alkyd, generate in-situ viscosity build upon standard neutralization, and may result in a film which can react and harden through oxidative curing.

Use of relatively low levels of higher acid value alkyds, that is, having an acid value greater than about 40, may be used to obtain suitable overall acid functionality of the polymer (AV/total polymer), but at the risk of generating a mini-emulsion which may become very viscous, and thus difficult to pump into the reactor. Thus, while high acid value alkyds are useful according to the invention, they may not be preferred.

Water-dispersible alkyd resins useful according to the invention include those known to be useful in coatings formulations. Long to medium oils are preferred. Alkyd resins are polyesters of polyhydroxyl alcohols and polycarboxylic acids chemically combined with various drying and semi-drying oils in different proportions. Polyhydroxyl alcohols may include but are not limited to such components as ethylene glycol, diethylene glycol, neopentyl glycol, 1,4-butanediol, 1,6-hexanediol, glycerol, pentaerythritol, sorbitol and mannitol. Suitable glycols thus include ethylene glycol, propylene glycol, diethylene glycol, triethylene glycol, tetraethylene glycol, pentaethylene glycol, hexaethylene glycol, heptaethylene glycol, octaethylene glycol, nonaethylene glycol, decaethylene glycol, neopentyl glycol, glycerol, 1,3-propanediol, 2,4-dimethyl-2-ethyl-hexane-1,3-diol, 2,2-dimethyl-1,2-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-tetramethyl-1,6-hexanediol, thiodiethanol, 1,2-cyclohexanedimethanol, 1,3-cyclohexanedimethanol, 1,4-cyclohexanedimethanol, 2,2,4-trimethyl-1,3-pentanediol, 2,2,4-tetramethyl-1,3-cyclobutanediol, p-xylenediol, hydroxypivalyl hydroxypivalate, 1,10-decanediol, hydrogenated bisphenol A, trimethylolpropane, trimethylolethane, pentaerythritol, erythritol, threitol, dipentaerythritol, sorbitol, mannitol, glycerine, trimellitic anhydride, pyromellitic dianhydride, dimethylolpropionic acid, and the like. Polycarboxylic acids may include, but are not limited to, phthalic acid, maleic acid, fumaric acid, isophthalic acid, succinic acid, adipic acid, azeleic acid, and sebacic acid, terephthalic acid, tetrachlorophthalic anhydride, tetrahydrophthalic anhydride, dodecanedioic acid, sebacic acid, azelaic acid, 1,4-cyclohexanedicarboxylic acid, 1,3-cyclohexanedicarboxylic acid, 2,6-naphthalenedicarboxylic acid, glutaric acid, as well as from anhydrides of such acids, and esters thereof, where they exist. Drying oils may include, but are not limited to, coconut oil, fish oil, linseed oil, tung oil, castor oil, cottonseed oil, safflower oil, sunflower oil, soybean oil, and tall oil.

In addition to an amount of polyol reacted with a fatty acid, fatty ester, or naturally occurring-partially saponified oil, an additional amount of a polyol or other branching agent such as a polycarboxylic acid may be used to increase the molecular weight and branching of the waterborne alkyd resin, and may be selected from trimethylolethane, pentaerythritol, erythritol, threitol, dipentaerythritol, sorbitol, glycerine, trimellitic anhydride, pyromellitic dianhydride, dimethylolpropionic acid, and trimethylolpropane.

Alkyds may be produced, for example, by direct fusion of glycerol, phthalic anhydride and drying oil. Solvents may be added to reduce the viscosity. Various proportions of the polycarboxylic acid, polyhydric alcohol, and oil are used to obtain alkyd resins of various properties, as is well known in the art. Water-reducible alkyd resins useful according to the invention generally have an acid value of at least about 25.

The acrylic portion of the modified alkyd may be derived from a single monomer (a homopolymer) or more than one monomer (a copolymer). Examples of suitable ethylenically unsaturated monomers include, but are not limited to, styrenic monomers such as styrene, α-methyl styrene, vinyl naphthalene, vinyl toluene, chloromethyl styrene and the like; ethylenically unsaturated species such as, for example, methyl acrylate, acrylic acid, methacrylic acid, methyl methacrylate, ethyl acrylate, ethyl methacrylate, butyl acrylate, butyl methacrylate, isobutyl acrylate, isobutyl methacrylate, ethylhexyl acrylate, ethylhexyl methacrylate, octyl acrylate, octyl methacrylate, styrene, glycidyl methacrylate, carbodiimide methacrylate, alkyl crotonates, vinyl acetate, di-n-butyl maleate, di-octylmaleate, and the like; and nitrogen containing monomers including t-butylaminoethyl methacrylate, dimethylaminoethyl methacrylate, diethylaminoethyl methacrylate, N,N-dimethylaminopropyl methacrylamide, 2-t-butylaminoethyl methacrylate, N,N-dimethylaminoethyl acrylate, N-(2-methacryloyloxy-ethyl)ethylene urea, and methacrylamidoethylethylene urea.

We have found that hydrophilic monomers enhance the in-situ viscosity modification, with MMA exhibiting a significant effect. However, such hydrophilic monomers may not be desirable in certain applications, especially when corrosion and humidity resistance are desired. We have also found that increasing from hydrophobic to more hydrophilic monomer combinations results in increases in neutralized viscosity, with MMA exhibiting the greatest effect on increasing viscosity relative to styrene, EHA, or BA.

Other monomers that may be used include monomers having latent oxidative functionality (LOF monomers). The LOF group may be any pendant moiety which is capable of (i) surviving the polymerization process and (ii) participating in or promoting oxidative crosslinking of the modified alkyd. After polymerization of the LOF acrylic monomer, the hybrid latex possesses sufficient LOF groups to increase or amplify the degree of crosslinking normally found in alkyds. Capable of undergoing an oxidative reaction, the LOF group may participate in or promote oxidative crosslinking as a source of free radicals to generate a free-radical flux. The LOF group may be an ethylenic unsaturation such as, but not limited to, allyl and vinyl groups. The LOF group may also be an acetoacetoxy moiety or enamine moiety. Examples of acrylic monomers having or providing latent oxidatively-functional (LOF) groups include, but are not limited to, allyl methacrylate, vinyl methacrylate, acetoacetoxyethyl methacrylate, hydroxybutenyl methacrylate, the allyl or diallyl ester of maleic acid, poly(allyl glycidyl ether), and the like.

Thus, the hybrid latexes of the invention are prepared by miniemulsion polymerizing acrylic monomer in the presence of at least one alkyd which contains enough acid functionality to render the alkyd dispersible or reducible in water with or without added neutralant. These alkyds typically have an acid value of at least about 25, to be water-reducible or water-dispersible without the need for added surfactant/dispersant.

The water-reducible alkyd may be added in combination with other non-water-reducible alkyds. The one or more alkyds are dissolved in the ethylenically unsaturated monomers, then dispersed in a water/surfactant mixture under miniemulsion polymerization conditions. In general, upon miniemulsion polymerization of the acrylic polymer compositions, it is believed that primarily it is the ethylenic unsaturation moiety of the acrylic that undergoes polymerization, and not the unsaturation along the backbone of the alkyd, though some grafting between the alkyd and the acrylic monomers may occur. The degree of latex viscosity modification may be manipulated by the choice of water-reducible (high acid number) alkyd, the ratio of water-reducible to non-water-reducible alkyds, the choice of acrylic monomers, choice and level of acid-functional monomers, and method of addition, solids level of the latex, and the degree of neutralization of the latex.

The polymerization process by which the hybrid latexes are made may also use one or more of an initiator (oxidant), a reducing agent, or a catalyst. Suitable initiators include conventional initiators such as ammonium persulfate, ammonium carbonate, hydrogen peroxide, t-butyl hydroperoxide, ammonium or alkali sulfate, di-benzoyl peroxide, lauryl peroxide, di-tertiarybutylperoxide, 2,2-azobisisobutyronitrile, benzoyl peroxide, and the like.

Suitable reducing agents are those which increase the rate of polymerization and include, for example, sodium bisulfite, sodium hydrosulfite, sodium formaldehyde sulfoxylate, ascorbic acid, isoascorbic acid, and mixtures thereof.

Suitable catalysts are those compounds which promote decomposition of the polymerization initiator under the polymerization reaction conditions thereby increasing the rate of polymerization. Suitable catalysts include transition metal compounds and driers. Examples of such catalysts include, but are not limited to, AQUACAT™, ferrous sulfate heptahydrate, ferrous chloride, cupric sulfate, cupric chloride, cobalt acetate, cobaltous sulfate, and mixtures thereof.

A conventional surfactant or a combination of surfactants may be used as a stabilizer, such as an anionic or non-ionic emulsifier, in the miniemulsion polymerization preparation of a hybrid latex of the invention. Examples of preferred surfactants include, but are not limited to, alkali or ammonium alkylsulfate, alkylsulfonic acid, or fatty acid, oxyethylated alkyphenol, sulfosuccinates and derivatives, or any combination of anionic or non-ionic surfactants. A list of suitable surfactants is available in the treatise:

McCutcheon's Emulsifiers & Detergents, North American Edition, MC Publishing Co., Glen Rock, NJ, 1997. Preferably, the surfactant will provide droplet/particle stability, but result in minimal aqueous phase nucleation (micellar or homogeneous).

In general, the alkyd portion of the hybrid latex represents about 5-60 wt.%, or from about 20-50 wt.% of the total solids of the latex, while the acrylic portion of the hybrid latex represents about 40-95 wt.%, or from about 50-80 wt.% of the total solids of the latex. Such hybrid latexes can be further used in coating compositions, and these coating compositions are also a feature of the claimed invention.

A coating composition of the invention contains a hybrid latex of the invention, and may be prepared by techniques known in the art, e.g as disclosed in US Patent Nos. 4,698,391, 4,737,551, and 3,345,313, incorporated herein by reference. Examples of such coating compositions include, for example, architectural coatings, maintenance coatings, industrial coatings, automotive coatings, textile coatings, inks, adhesives, and coatings for paper, wood, and plastics. Coating compositions of the invention may contain significantly less solvent than either all acrylic or all alkyd coatings, less than 25 wt. % to as low as 1 wt.% and even zero VOC content. The alkyd portion of the hybrid resin retains the desirable properties of an alkyd while the acrylic portion of the resin compliments these properties. The acid functionality of the alkyd, along with any additional acid functionality from added monomers, promotes viscosity build-up upon neutralization of the hybrid latex. The coating compositions of the invention produce coatings that have high gloss, fast cure, and good acid and caustic resistance.

The coating composition may be coated onto a substrate and cured using techniques known in the art (e.g. by spray-applying 3-4 mils of wet coating onto a metal panel, and heating in a 150°C forced air oven for 30 minutes). The substrate can be any common substrate such as paper, polyester films such as polyethylene and polypropylene, metals such as aluminum and steel, glass, urethane elastomers and primed (painted) substrates, and the like. The coating composition of the invention may be cured at room temperature (ambient cure), at elevated temperatures (thermal cure), or may be photochemically cured.

The substrate can be any common substrate such as paper, polyester films such as polyethylene and polypropylene, metals such as aluminum and steel, glass, urethane elastomers and primed (painted) substrates, and the like. The coating composition of the invention may be cured at room temperature (ambient cure), at elevated temperatures (thermal cure), or photochemically cured.

A coating composition of the invention may further contain coating additives. Examples of such coating additives include, but are not limited to, one or more leveling, rheology, and flow control agents such as silicones, fluorocarbons or cellulosics; extenders; reactive coalescing aids such as those described in U.S. Pat. No. 5,349,026, incorporated herein by reference; plasticizers; flatting agents; pigment wetting and dispersing agents and surfactants; ultraviolet (UV) absorbers; UV light stabilizers; tinting pigments; colorants; defoaming and antifoaming agents; anti-settling, anti-sag and bodying agents; anti-skinning agents; anti-flooding and anti-floating agents; biocides, fungicides and mildewcides; corrosion inhibitors; thickening agents; or coalescing agents. Specific examples of such additives can be found in Raw Materials Index, published by the National Paint & Coatings Association, 1500 Rhode Island Avenue, N.W., Washington, D.C. 20005. Further examples of such additives and emulsion polymerization methodology may be found in U.S. Pat. No. 5,371,148, incorporated herein by reference.

Examples of flatting agents include, but are not limited to, synthetic silica, available from the Davison Chemical Division of W. R. Grace & Company under the SYLOID.RTM. tradename; polypropylene, available from Hercules Inc. under the HERCOFLAT.RTM. tradename; and synthetic silicate, available from J. M. Huber Corporation under the ZEOLEX.RTM. tradename.

Examples of dispersing agents and surfactants include, but are not limited to, sodium bis(tridecyl) sulfosuccinnate, di(2-ethylhexyl) sodium sulfosuccinnate, sodium dihexylsulfosuccinnate, sodium dicyclohexyl sulfosuccinnate, diamyl sodium sulfosuccinnate, sodium diisobutyl sulfosuccinnate, disodium iso-decyl sulfosuccinnate, disodium ethoxylated alcohol half ester of sulfosuccinnic acid, disodium alkyl amido polyethoxy sulfosuccinnate, tetra-sodium N-(1,2-dicarboxyethyl)-N-octadecyl sulfosuccinnamate, disodium N-octasulfosuccinnamate, sulfated ethoxylated nonylphenol, 2-amino-2-methyl-1-propanol, and the like.

Examples of viscosity, suspension, and flow control agents include, but are not limited to, polyaminoamide phosphate, high molecular weight carboxylic acid salts of polyamine amides, and alkylene amine salts of an unsaturated fatty acid, all available from BYK Chemie U.S.A. under the ANTI TERRA tradename. Further examples include polysiloxane copolymers, polyacrylate solution, cellulose esters, hydroxyethyl cellulose, hydrophobically-modified hydroxyethyl cellulose, hydroxypropyl cellulose, polyamide wax, polyolefin wax, carboxymethyl cellulose, ammonium polyacrylate, sodium polyacrylate, hydroxypropyl methyl cellulose, ethyl hydroxyethyl cellulose, polyethylene oxide, guar gum and the like. Other examples of thickeners include the methylene/ethylene oxide associative thickeners and water soluble carboxylated thickeners such as, for example, UCAR POLYPHOBE.RTM. by Union Carbide and ACRYSOL RM 825 available from Rohm and Haas of Philadelphia, Pa.

Several proprietary antifoaming agents are commercially available and include, for example, BUBREAK.RTM. of Buckman Laboratories Inc., BYK.RTM. of BYK Chemie, U.S.A., FOAMASTER.RTM. and NOPCO.RTM. of Henkel Corp./Coating Chemicals, DREWPLUS.RTM. of the Drew Industrial Division of Ashland Chemical Company, TRYSOL.RTM. and TROYKYD.RTM. of Troy Chemical Corporation, and SAG.RTM. of Union Carbide Corporation.

Examples of fungicides, mildewcides, and biocides include, but are not limited to, 4,4-dimethyloxazolidine, 3,4,4-trimethyloxazolidine, modified barium metaborate, potassium N-hydroxy-methyl-N-methyldithiocarbamate, 2-(thiocyano-methylthio)benzothiazole, potassium dimethyl dithiocarbamate, adamantane, N-(trichloromethylthio)phthalimide, 2,4,5,6-tetrachloro-isophthalonitrile, orthophenyl phenol, 2,4,5-trichlorophenol, dehydroacetic acid, copper naphthenate, copper octoate, organic arsenic, tributyl tin oxide, zinc naphthenate, and copper 8-quinolinate.

Examples of U.V. absorbers and U.V. light stabilizers include, among others, substituted benzophenone, substituted benzotriazoles, hindered amines, and hindered benzoates, available from American Cyanamid Company under the CYASORB UV tradename, and diethyl-3-acetyl-4-hydroxy-benzyl-phosphonate, 4-dodecyloxy-2-hydroxy benzophenone, and resorcinol monobenzoate.

Examples of solvents and coalescing agents are well known and include but are not limited to ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, TEXANOL.RTM. ester alcohol (Eastman Chemical Company), and the like. Such solvents and coalescing aids may also include reactive solvents and coalescing aids such as diallyl phthalate, SANTOLINK XI-100.RTM. polyglycidyl allyl ether from Monsanto, and others as described in U.S. Pat. Nos. 5,349,026 and 5,371,148, incorporated herein by reference.

Pigments suitable for use in the coating compositions according to the invention are the typical organic and inorganic pigments, well-known to one of ordinary skill in the art of surface coatings, especially those set forth by the Colour Index, 3d Ed., 2d Rev., 1982, published by the Society of Dyers and Colourists in association with the American Association of Textile Chemists and Colorists. Examples include, but are not limited to, the following: titanium dioxide, barytes, clay, or calcium carbonate, CI Pigment White 6 (titanium dioxide); CI Pigment Red 101 (red iron oxide); CI Pigment Yellow 42; CI Pigment Blue 15, 15:1, 15:2, 15:3, 15:4 (copper phthalocyanines); CI Pigment Red 49:1; and CI Pigment Red 57:1. Colorants such as phthalocyanine blue, molybdate orange, carbon black or TIPURE R-746 (a titanium pure slurry available from Dupont Chemical, Inc. of Wilmington, Del.) are also suitable for the coating compositions of the invention.

The following materials were used in the examples to follow:

Duramac 74-7474 = Eastman alkyd (75% solids in butanol and EGMBE), chain stopped, fatty acid blend, having an acid value of about 40

Duramac 74-7495 = Eastman alkyd (70% solids in butanol and EGMBE), chain stopped, fatty acid blend, having an acid value of about 35

Aroplaz 6440-A4-85 = Reichhold alkyd (85% solids in n-butyl acetate), medium oil, vegetable oil based, having an acid value of about 9

CCP 6030 = Cook Composites and Polymers alkyd (70% solids in EB), having an acid value of about 40

Duramac 57-5816 = Eastman alkyd (90% solids in mineral spirits), sunflower-fatty acid blend, having an acid value of about 10

Experimental:

Neutralized Viscosity Measurements

Low shear single point viscosity was determined using a Brookfield type viscometer with appropriate spindle and speed selections for the ranges of viscosity investigated.

Dynamic viscosity measurements which provide a characterization of viscosity over a range of shear stress and shear rate were made using a bob and cup viscometer. The viscosities were measured on a Rheometrics Dynamic Stress Rheometer (SR-200) at 25°C. A stress sweep was conducted to measure the steady shear viscosity using a Couette fixture with cup diameter of 32 mm, bob diameter of 29.5 mm and bob length of 44 mm . The applied stress was varied from 1 dyne /cm^2 to 3000 dyne/cm^2.

Acid value, or acid number, determination:

Acid value determination is well-known in the art, and unless otherwise indicated, the acid numbers, or acid values, described herein were determined as follows. The alkyd is dissolved in a 50:50 mixture by weight of isopropyl alcohol: methylene chloride, along with a drop of phenolphthalein indicator. A 0.1M solution of potassium hydroxide (KOH) is prepared in methanol. The alkyd solution is titrated with the KOH solution until a faint pink color is detected. The final acid number is determined according to the following formula:

$$AN = \text{(mL of titrant)} \times \text{(Moles of titrant)} \times \text{(Formula Wt. of titrant, 56.1 for KOH)} / \text{weight of sample}$$

Overall Acid Value [AV] Contribution from Alkyd(s) Only

The overall contribution of acid functionality obtained from the alkyds only (excludes acid monomer) as a function of total polymer was determined using the following equation:

$$AV/Total\ Polymer =$$

$$[AV_1 \times Wt.\ Alkyd_1 + AV_2 \times Wt.\ Alkyd_2] / [Wt.\ Acrylic\ Polymer + Wt.\ Alkyd_1 + Wt.\ Alkyd_2]$$

Values for each example are included in Tables 1 and 3.

This invention can be further illustrated by the following examples of preferred embodiments thereof, although it will be understood that these examples are included merely for purposes of illustration and are not intended to limit the scope of the invention unless otherwise specifically indicated.

**EXAMPLES**

Examples 1-16

For each of examples 1-16, to a 1000 mL resin kettle equipped with a condenser, nitrogen purge, and a subsurface feed tube were added 122 g of water. A nitrogen purge was begun and the contents heated and maintained at 80°C. The alkyds indicated in Table 1 were added to the monomer mix and dissolved. (Refer to Table 1 also for latex composition data.) Water and surfactant(s) were premixed, then the monomer/alkyd mix was added to form a pre-emulsion. Surfactants included Aerosol OT-NV (Cytec Industries) and/or Hitenol BC1025 (DKS). 4.5 g of ethylhexyl mercaptopropionate was added to the pre-emulsion for molecular weight control of the polymer. The pre-emulsion was sheared using an IKA (Model SD-45) rotor/stator homogenizer by pumping through a flow cell which surrounded the shearing device with the homogenizer operating at 100% output to form a miniemulsion. 80.4 g (10%) of the miniemulsion was charged to the reactor. 0.60 g of ammonium persulfate was mixed in 10 g of water and charged to the reactor. After 15 minutes the remaining miniemulsion was fed over 180 minutes to the reactor. Simultaneously, an initiator feed composed of 80.0 g of water, 0.85 g of ammonium persulfate, and 0.85 g of ammonium carbonate was also fed over 180 minutes. After the feeds ended, the reactor was held at 80°C for 15 minutes, before cooling to 55°C. Then a reductant solution consisting of 6.5 g water, 0.99 g isoascorbic acid, and 1.20 g of 0.5% iron sulfate heptahydrate was added to the reactor. A solution of 19.0 g water and 1.10 g 70% t-butyl hydroperoxide was then fed over 45 minutes. The reaction mix was cooled. The latex was filtered through a 100 mesh wire screen and filterable solids or scrap collected. The droplet size (miniemulsion), particle size, viscosity (Brookhaven), and pH of the resulting alkyd/acrylic hybrid resin latexes were determined. The droplet and particle sizes were measured using Mictrotrac UPA laser light-scattering device (180° backscattering). The droplets and particles were diluted approximately 1:50 in water. Table 1 lists detailed compositions for Examples 1-16. Table 2 summarizes hybrid latex property data for Examples 1-16.

Figure 1 (Examples 1-4) demonstrates the effect of neutralization on the viscosity of inventive systems made with two similar water-reducible alkyds added at two different levels.

Figure 2 (Examples 15-16) reveals how the viscosity remains unchanged upon neutralization for a comparative hybrid system made with two levels of a non-water-reducible alkyd (15% and 30%).

Figure 3 (Example 5) demonstrates how the addition of a small amount of a water-reducible alkyd in combination with a non-water-reducible alkyd leads to a significant viscosity response upon neutralization, even though the AV/total polymer value is relatively low (3.35).

Figure 4 (Examples 6-14) further demonstrates the effect of neutralization on the viscosity profiles of hybrids which incorporate various levels of a water-reducible alkyd (CCP-6030) with various monomer compositions.

Examples 17-28

For each of examples 17 - 28, to a 1000 mL resin kettle equipped with a condenser, nitrogen purge, and a subsurface feed tube were added 122 g of water. A nitrogen purge was begun and the contents heated and maintained at 80°C. The alkyds obtained from a commercial source (Duramac 74-7474 and Duramac 57-5816, Eastman Chemical Company) were added to the monomer mix and dissolved. The water-reducible, high acid value alkyd (Duramac 74-7474) was not reduced in water, but dissolved directly in the monomer mixture. (Refer to Table 3 for latex composition data.) Water and surfactant(s) were premixed, then the monomer/alkyd mix for stage 1 was added to form a pre-emulsion. Surfactants included Aerosol OT-NV (Cytec Industries) and/or Hitenol BC1025 (DKS). 4.8 g of isooctyl mercaptopropionate was added to the pre-emulsion for molecular weight control of the polymer. The pre-emulsion was sheared using an IKA (Model SD-45) rotor/stator homogenizer by pumping through a flow cell which surrounded the shearing device with the homogenizer operating at 100% output to form a miniemulsion. (Comparative Example 28 was not sheared.) 0.60 g of ammonium persulfate was mixed in 5 g of water and charged to the reactor. After 15 minutes the miniemulsion (stage 1 feed) was fed over 180 minutes to the reactor. Simultaneously, an initiator feed composed of 80.0 g of water, 1.0 g of ammonium persulfate, and 1.0 g of ammonium carbonate was fed over a 230 minute period. After the first stage miniemulsion feed ended, the reaction mixture was held for 15 minutes while the initiator continued to be added. Then a second stage monomer mixture (neat, no shearing) was added over 20 minutes. After the feeds ended, the reactor was held at 80°C for 15 minutes while the initiator feed was completed. The reaction mixture was cooled to 55°C. Then a reductant solution consisting of 6.5 g water, 0.99 g isoascorbic acid, and 1.20 g of 0.5% iron sulfate heptahydrate (chelated with an equal amount of disodium ethylene diaminetetracetic acid) was added to the reactor over 30 minutes. Simultaneously, a solution of 19.0 g water and 1.10 g 70% t-butyl hydroperoxide was then fed over 47 minutes. The reaction mix was cooled. The latex was filtered through a 100 mesh wire screen and filterable solids or scrap collected. The droplet size (miniemulsion), particle size, viscosity (Brookhaven), and pH of the resulting alkyd/acrylic hybrid resin latexes were determined. The droplet and particle sizes were measured using Mictrotrac UPA laser light-scattering device (180° backscattering). The droplets and particles were diluted approximately 1:50 in water. Table 3 lists detailed compositions for Examples 17-28. Table 4 summarizes latex property data for Examples 17-28.

Table 5 demonstrates the effects of various compositional variables on the low shear Brookfield viscosity after neutralization with ammonium hydroxide. Examples 18, 19, 21, and 22 exhibit the relative increase in low shear neutralized viscosity obtained by shifting from a predominantly hydrophobic monomer composition to a predominantly hydrophilic monomer composition all at the same AV/total polymer value of 3.5. Examples 19, 20, and 24 (AV/total polymer = 3.5) exhibit the ability to further increase the low shear neutralized viscosity by increasing total acid monomer level. Examples 17, 18, and 23 show that increasing the amount of water-reducible alkyd relative to the non-water reducible alkyd (and thus increasing the overall AV/total polymer ratio) results in increased low shear neutralized viscosity.

Selection of the monomer type, acid monomer level, and water-reducible alkyd can all affect the Brookfield low shear neutralized viscosity, a single shear rate viscosity measurement. However, dynamic viscosity measurements provide a more accurate characterization of the overall rheological behavior for a given system. Dynamic viscosity measurements using a Rheometrics Dynamic Stress Rheometer (SR-200) (bob and cup type viscometer) are provided in Figures 5 - 8. These results demonstrate that incorporation and subsequent neutralization of a water-reducible alkyd leads to increases in the viscosity over a wide range of shear rate. Figure 5 demonstrates that the dynamic viscosity increases over three orders of magnitude by increasing Duramac 7474 from a 5 wt.% level (Ex. 20, AV/total polymer=3.5) to a 15 wt.% level (Ex. 26, AV/total polymer=6.5) in an MMA/BA system with an acid monomer level of 1.25 wt.% BOM+alkyd. Figure 6 shows a similar trend in a styrene/EHA system with 5 wt.% acid monomer. Again the viscosity increases by up to three orders of magnitude as the alkyd level is increased from 0 wt.% (Ex. 17, AV/total polymer=0) to 5 wt.% (Ex. 18, AV/total polymer=3.5) then to 15 wt.% (Ex. 23, AV/total polymer=6.5). Figure 7 reveals that the effect of the water-reducible alkyd is much greater than the effect of acid monomer based on a dynamic viscosity measurement. Example 17 which has some low acid value alkyd but no water-reducible alkyd (AV/total polymer=2.0) and high acid monomer level exhibits a low neutralized viscosity profile as a function of shear rate. However, with low acid monomer, but added water-reducible alkyd in Example 27 (AV/total polymer=8.0), the neutralized viscosity increases substantially over a wide range of shear rates.

Example 28 demonstrates the importance of utilizing a miniemulsion polymerization process. The example 28 run is a direct repeat of Example 27, except that the pre-emulsion is not sheared to form a miniemulsion. The resulting latex had high scrap (> 9000 ppm), generated a large amount of precipitate in the base of the reactor, the latex would not filter, and it exhibited no viscosity response upon neutralization. Example 27 generated a clean latex with good filtration, low scrap formation, and a significant neutralized viscosity response. Lack of shearing is believed to result in a shift in the primary particle nucleation from within the droplets to outside the droplets. The monomer in the droplets is believed to subsequently transfer to the separate particles during the polymerization stage, leaving the unneutralized alkyd without an adequate solvent, thus resulting in precipitation, poor filtration, and a very dirty latex, as obtained in Example 28.

**Table 1 - Compositions Used for Examples 1-16**

| Ex. | Monomer Wt. % (BOM+alkyd) | Surfactant(s) (Wt.% BOM + alkyd) | Alkyd 1 (AV >20) / Wt.% (BOM + alkyd) | Alkyd 2 (AV=9) /Wt. % (BOM + alkyd) | AV / total polymer |
|---|---|---|---|---|---|
| 1 | Sty/EHA/AAEM/MAA 51.8/22.7/8.0/2.5 | Aerosol OT-NV 1.5 | Duramac 74-7474 / 15.0 | | 6.0 |
| 2 | Sty/EHA/AAEM/MAA 44.7/19.8/8.0/2.5 | AerosolOT-NV 1.5 | Duramac 74-7474 / 25.0 | | 10.0 |
| 3 | Sty/EHA/AAEM/MAA 51.8/22.7/8.0/2.5 | Aerosol OT-NV 1.5 | Duramac 74-7495 / 15.0 | | 5.25 |
| 4 | Sty/EHA/AAEM/MAA 44.7/19.8/8.0/2.5 | AerosolOT-NV 1.5 | Duramac 74-7495 / 25.0 | | 8.75 |
| 5 | Sty/EHA/AAEM/MAA/A A45.9/21.1/8.0/1.25/3.75 ** | Aerosol OT-NV 1.13 / Hitenol BC20 0.37 | Duramac 74-7474 / 5.0 | Aroplaz 6440-A4-85 /15.0 | 3.35 |
| 6 | Sty/EHA/AAEM/ MAA = 56.76/25.74/0.0/2.5 | 1.5 Aerosol OT-NV | CCP 6030 / 15.0 | | 6.0 |
| 7 | Sty/EHA/AAEM/ MAA = 63.7/18.9/0.0/2.5 | 1.5 Aerosol OT-NV | CCP 6030 / 15.0 | | 6.0 |
| 8 | Sty/EHA/ AAEM / MAA = 51.8/22.7/8.0/2.5 | 1.5 Aerosol OT-NV | CCP 6030 / 15.0 | | 6.0 |
| 9 | Sty/EHA/ AAEM / MAA = 58.8/15.7/8.0/2.5 | 1.5 Aerosol OT-NV | CCP 6030 / 15.0 | | 6.0 |
| 10 | Sty/EHA/ AAEM / MAA = 53.2/24.3/0.0/2.5 | 1.5 Aerosol OT-NV | CCP 6030 / 20.0 | | 8.0 |
| 11 | Sty/EHA/ AAEM / MAA = 49.7/22.8/0.0/2.5 | 1.5 Aerosol OT-NV | CCP 6030 / 25.0 | | 10.0 |
| 12 | Sty/EHA/ AAEM / MAA = 44.8/19.7/8.0/2.5 | 1.5 Aerosol OT-NV | CCP 6030 / 25.0 | | 10.0 |
| 13 | Sty/EHA/ AAEM / MAA = 46.2/21.3/0.0/2.5 | 1.5 Aerosol OT-NV | CCP 6030 / 30.0 | | 12.0 |
| 14 | Sty/EHA/ AAEM / MAA = 42.6/19.9/0.0/2.5 | 1.5 Aerosol OT-NV | CCP 6030 / 35.0 | | 14.0 |
| 15 | Sty/EHA/AAEM/MAA/A A 52.2/22.3/8.0/0.62/1.88 | Aerosol OT-NV 1.13 / Hitenol BC1025 0.37 | | Aroplaz 6440-A4-85 /15.0 | 1.35 |

(continued)

| Ex. | Monomer Wt. % (BOM+alkyd) | Surfactant(s) (Wt.% BOM + alkyd) | Alkyd 1 (AV >20) / Wt.% (BOM + alkyd) | Alkyd 2 (AV=9) /Wt. % (BOM + alkyd) | AV / total polymer |
|---|---|---|---|---|---|
| 16 | Sty/EHA/AAEM/MAA/A A 41.6/17.8/8.0/0.62/1.88 | Aerosol OT-NV 1.13 / Hitenol BC1025 0.37 | | Aroplaz 6440-A4-85 /30.0 | 2.7 |

** One half of the acid in this run was charged to the miniemulsion during the last one hour of the feed period.

BOM + alk = based on monomer + alkyd;

Total solids (theoretical) = 40% Sty = styrene, EHA = 2-ethylhexyl acrylate, AAEM = acetoacetoxy ethyl methacrylate, MAA = methacrylic acid, AA = acrylic acid Duramac 74-7474 = Eastman alkyd (75% solids in butanol and EGMBE), chain stopped, fatty acid blend, acid value = 40 Duramac 74-7495 = Eastman alkyd (70% solids in butanol and EGMBE), chain stopped, fatty acid blend, acid value = 35 Aroplaz 6440-A4-85 = Reichhold alkyd (85% solids in n-butyl acetate), medium oil, vegetable oil based, acid value = 9 CCP 6030 = Cook Composites and Polymers alkyd (70% solids in EB), acid value =40

**TABLE 2 - Latex Property Summary for Examples 1-16**

| Ex. | Droplet Size (nm) | Particle Size (nm) | Solids % | pH | Viscosity (cps) #1 spindle @60 RPM | Scrap (ppm) |
|---|---|---|---|---|---|---|
| 1 | 257 | 228 | 42.0 | 4.8 | 14 | 428 |
| 2 | 243 | 241 | 41.2 | 4.2 | 12 | 298 |
| 3 | 314 | 181 | 42.1 | 5.1 | 11 | 854 |
| 4 | 309 | 233 | 41.1 | 4.7 | 14 | 295 |
| 5 | 252 | 189 | 44.8 | 4.0 | 28 | 485 |
| 6 | 283 | 200 | 41.8 | 4.4 | 12 | 504 |
| 7 | 300 | 233 | 41.0 | 4.4 | 12 | 927 |
| 8 | 314 | 198 | 41.2 | 4.8 | 12 | 376 |
| 9 | 260 | 205 | 40.4 | 4.2 | 11 | 362 |
| 10 | 416 | 249 | 41.5 | 4.3 | 12 | 3075 |
| 11 | 324 | 244 | 38.7 | 4.0 | 10 | 676 |
| 12 | 409 | 267 | 38.7 | 4.1 | 9 | 473 |
| 13 | 486 | 268 | 39.8 | 4.0 | 10 | 803 |
| 14 | 479 | 308 | 38.4 | 4.2 | 10 | 237 |
| 15 | 305 | 211 | 42.4 | 4.3 | 16 | 191 |
| 16 | 475 | 173 | 41.1 | 4.5 | 12 | 200 |

**Table 3 - Compositions Used for Examples 17-27**

| Ex. | Monomer Wt. % (Based on total monomer+alkyd) | % of Each Monomer Added in Stage 2 | Surfactant(s) (Wt. % BOM + alkyd) | Alkyd 1 (AV=40) / Wt. % (BOM + alkyd) | Alkyd 2 (AV=10) / Wt. % (BOM + alkyd) | AV / total polymer |
|---|---|---|---|---|---|---|
| 17 | Sty/EHA/AAEM/MAA/AA 36.7/16.5/6.8/1.25/3.75 | Sty/EHA/AAEM 20/20/20 | Aerosol OT-NV 1.13/Hitenol BC20 0.37 | Duramac 74-7474/0.0 | Duramac 57-5816/20 | 2.0 |
| 18 | Sty/EHA/AAEM/MAA/AA 36.7/16.5/6.8/1.25/3.75 | Sty/EHA/AAEM 20/20/20 | Aerosol OT-NV 1.13/Hitenol BC20 0.37 | Duramac 74-7474/5.0 | Duramac 57-5816/ 15.0 | 3.5 |
| 19 | MMABA/AAEM/MAA/A A 32.1/21.1/6.8/1.25/3.75 | MMA/BA/AAEM 22/17/20 | Aerosol OT-NV 1.13/Hitenol BC20 0.37 | Duramac 74-7474/5.0 | Duramac 57-5816/ 15.0 | 3.5 |
| 20 | MMA/BA/AAEM/MAA/A A 36.2/20.7/6.8/**0.31/0.94** | MMABA/AAEM 20/17/20 | Aerosol OT-NV 1.13 / Hitenol BC20 0.37 | Duramac 74-7474/5.0 | Duramac 57-5816/ 15.0 | 3.5 |
| 21 | Sty/**BA**/AAEM/MAA/AA 32.8/20.4/6.8/1.25/3.75 | Sty/BA/AAEM 22/17/20 | Aerosol OT-NV 1.13 / Hitenol BC20 0.37 | Duramac 74-7474/5.0 | Duramac 57-5816 /15.0 | 3.5 |
| 22 | MMA/**EHA**/AAEM/MAA/ AA 35.8/17.4/6.8/1.25/3.75 | MMA/EHA/ AAEM 20/19/20 | Aerosol OT-NV 1.13/Hitenol BC20 0.37 | Duramac 74-7474/5.0 | Duramac 57-5816 / 15.0 | 3.5 |
| 23 | Sty/EHA/AAEM/MAA/AA 36.7/16.5/6.8/1.25/3.75 | Sty/EHA/AAEM 20/20/20 | Aerosol OT-NV 1.13/Hitenol BC20 0.37 | Duramac 74-7474/**15.0** | Duramac 57-5816/5.0 | 6.5 |
| 24 | MMA/BA/AAEM/MAA/A A 32.1/23.0/6.8/**0.8/2.3** | MMA/BA/AAEM 25/25/25 | Aerosol OT-NV 1.13/Hitenol BC1025 0.37 | Duramac 74-7474/5.0 | Duramac 57-5816 /15.0 | 3.5 |
| 25 | Sty/EHA/AAEM/MAA/AA 40.8/16.2/6.8/0.**31/0.94** | Sty/EHA/AAEM 18/20/20 | Aerosol OT-NV 1.13/Hitenol BC20 0.37 | Duramac 74-7474/**15.0** | Duramac 57-5816/5.0 | 6.5 |

| Ex. | Monomer Wt. % (Based on total monomer+alkyd) | % of Each Monomer Added in Stage 2 | Surfactant(s) (Wt. % BOM + alkyd) | Alkyd 1 (AV=40) / Wt. % (BOM + alkyd) | Alkyd 2 (AV=10) / Wt. % (BOM + alkyd) | AV / total polymer |
|---|---|---|---|---|---|---|
| 26 | MMABA/AAEM/MAA/A A 36.2/20.8/6.8/**0.31/0.94** | MMA/BA/AAEM 20/17/20 | Aerosol OT-NV 1.13 / Hitenol BC1025 0.37 | Duramac 74-7474/**15.0** | Duramac 57-5816/5.0 | 6.5 |
| 27 | Sty/EHA/AAEM/MAA/AA 40.8/16.2/6.8/**0.31/0.94** | Sty/EHA/AAEM 18/20/20 | Aerosol OT-NV 1.13 / Hitenol BC20 0.37 | Duramac 74-7474/**20.0** | Duramac 57-5816/0.0 | 8.0 |
| 28 (No Shea ring) | Sty/EHA/AAEM/MAA/AA 40.8/16.2/6.8/**0.31/0.94** | Sty/EHA/AAEM 18/20/20 | Aerosol OT-NV 1.13/Hitenol BC20 0.37 | Duramac 74-7474/**20.0** | Duramac 57-5816 / 0.0 | 8.0 |

BOM + alk = based on monomer + alkyd
Total solids (theoretical) = 50%
Sty = styrene, EHA = 2-ethylhexyl acrylate, AAEM = acetoacetoxy ethyl methacrylate,
MAA = methacrylic acid, AA = acrylic acid
Duramac 74-7474 = Eastman alkyd (75% solids in butanol and EGMBE), chain stopped, fatty acid blend,
acid value = 40
Duramac 57-5816 = Eastman alkyd (90% solids in mineral spirits), sunflower-fatty acid blend, acid value =10

TABLE 4 — Latex Property Summary for Examples 17-27

| Ex. | Droplet Size (nm) | Particle Size (nm) | Solids % | Unneutralized Viscosity (cps) | | Neutralized Viscosity - Brookfield (cps) | | Scrap (ppm) |
|---|---|---|---|---|---|---|---|---|
| | | | | pH | Visc. | pH | Visc. | |
| 17 | 297 | 165 | 48.1 | 4.2 | 60 | 9.0 | 242 | 379 |
| 18 | 243 | 183 | 48.5 | 3.9 | 70 | 9.0 | 520 | 189 |
| 19 | 212 | 229 | 48.6 | 4.6 | 46 | 7.2 | >10,000 | 926 |
| 20 | 238 | 260 | 48.2 | 5.0 | 22 | 9.0 | 43 | 69 |
| 21 | 233 | 194 | 49.1 | 3.9 | 65 | 9.0 | 1352 | 530 |
| 22 | 232 | 230 | 49.4 | 4.3 | 37 | 7.9 | >10,000 | 641 |
| 23 | 277 | 174 | 49.1 | 3.8 | 51 | 7.5 | 4480 | 382 |
| 24 | 266 | 263 | 48.2 | 4.3 | 27 | 8.3 | 6700 | 74 |
| 25 | 386 | 178 | 48.5 | 4.2 | 47 | 9.0 | 500 | 630 |
| 26 | 226 | 247 | 48.8 | 4.7 | 24 | 8.2 | 1650 | 424 |
| 27 | 270 | 221 | 46.7 | 3.9 | 23 | 8.8 | 2950 | 248 |
| 28 | N/a | 210 | 44.0 | 4.0 | 16 | 9.0 | 20 | > 9000 |

**TABLE 5 - Effects of Compositional Variables on Neutralized Viscosity**

| Ex. | Hard Monomer | Soft Monomer | Non-WR Alkyd | WR Alkyd | Total Acid | Initial Viscosity | pH After Neutralization | Low Shear Viscosity After Neutralization |
|---|---|---|---|---|---|---|---|---|
| | | | (Wt.% BOM+alkyd) | (Wt.% BOM+alkyd) | (Wt.% BOM+alkyd) | (cps) | | (cps) |
| **Effect of Monomer Combination** | | | | | | | | |
| 18 | Sty | **EHA** | 15 | 5 | 5 | 70 | 9.0 | **520** |
| 21 | Sty | **BA** | 15 | 5 | 5 | 65 | 9.0 | **1352** |
| 22 | MMA | **EHA** | 15 | 5 | 5 | 37 | 7.9 | **>10,000** |
| 19 | MMA | **BA** | 15 | 5 | 5 | 46 | 7.2 | **>10,000** |
| **Effect of Acid Level** | | | | | | | | |
| 20 | MMA | BA | 15 | 5 | 1.25 | 22 | 9.0 | **43** |
| 24 | MMA | BA | 15 | 5 | 3.125 | 27 | 8.3 | **6700** |
| 19 | MMA | BA | 15 | 5 | 5.0 | 46 | 7.2 | **>10,000** |
| **Effect of Water-reducible Alkyd Level** | | | | | | | | |
| 17 | Sty | EHA | 20.0 | 0 | 5.0 | 60 | 9.0 | **242** |
| 18 | Sty | EHA | 15.0 | 5.0 | 5.0 | 70 | 9.0 | **520** |
| 23 | Sty | EHA | 5.0 | 15.0 | 5.0 | 51 | 7.5 | **4480** |
| WR = water-reducible<br>Non-WR = non-water-reducible | | | | | | | | |

**Claims**

1. A hybrid latex composition, obtainable by a process comprising:

   dissolving at least one alkyd resin having an acid value of at least about 25 meq KOH/g in one or more ethylenically-unsaturated monomers to obtain an alkyd/monomer mixture;
   dispersing the alkyd/monomer mixture in an aqueous medium to form a pre-emulsion;
   applying shear to the pre-emulsion to obtain a miniemulsion having an average particle size from about 25 nm to about 500 nm; and
   emulsion polymerizing the miniemulsion via free radical polymerization to obtain a hybrid latex.

2. The hybrid latex composition of claim 1, wherein the alkyd resin has an acid value from about 25 to about 100 meq KOH/g.

3. The hybrid latex composition of claim 2, wherein the alkyd resin has an acid value from about 30 to about 100 meq KOH/g.

4. The hybrid latex composition of claim 3, wherein the alkyd resin has an acid value from about 35 to about 75 meq KOH/g.

5. The hybrid latex composition of claim 3, wherein the alkyd resin has an acid value from about 30 to about 50 meq KOH/g.

6. The hybrid latex composition of claim 5, wherein the alkyd resin has an acid value from about 35 to about 45 meq KOH/g.

7. The hybrid latex composition of any of claims 1 to 6, wherein the miniemulsion has an average droplet size from about 25 nm to about 500 nm.

8. The hybrid latex composition of claim 7, wherein the miniemulsion has an average droplet size from about 50 nm to about 400 nm.

9. The hybrid latex composition of claim 8, wherein the miniemulsion has an average droplet size from about 100 nm to about 300 nm.

10. The hybrid latex composition of any of claims 1 to 9, wherein the one or more ethylenically-unsaturated monomers comprises one or more of: styrene, $\alpha$-methyl styrene, vinyl naphthalene, vinyl toluene, chloromethyl styrene, methyl acrylate, acrylic acid, methacrylic acid, methyl methacrylate, ethyl acrylate, ethyl methacrylate, butyl acrylate, butyl methacrylate, isobutyl acrylate, isobutyl methacrylate, ethylhexyl acrylate, ethylhexyl methacrylate, octyl acrylate, octyl methacrylate, glycidyl acrylate, glycidyl methacrylate, carbodiimide methacrylate, an alkyl crotonate, vinyl acetate, di-n-butyl maleate, di-octylmaleate, t-butylaminoethyl methacrylate, dimethylaminoethyl methacrylate, diethylaminoethyl methacrylate, N,N-dimethylaminopropyl methacrylamide, 2-t-butylaminoethyl methacrylate, N,N-dimethylaminoethyl acrylate, N-(2-methacryloyloxy-ethyl)ethylene urea, and methacrylamidoethylethylene urea.

11. The hybrid latex composition of claim 10, wherein the one or more ethylenically-unsaturated monomers comprises one or more of: styrene, acrylic acid, methacrylic acid, methyl methacrylate, ethyl acrylate, ethyl methacrylate, butyl acrylate, butyl methacrylate, ethylhexyl acrylate, ethylhexyl methacrylate, vinyl acetate.

12. A coating composition, comprising the hybrid latex composition of any of claims 1 to 11.

13. The coating composition of claim 12, comprising one or more polymers that are compatible with the hybrid latex composition.

14. A method of increasing the viscosity of the hybrid latex composition of any of claims 1 to 11, comprising adding to the hybrid latex composition one or more neutralizers.

15. A method of increasing the viscosity of the coating composition of claim 12 or 13, comprising adding to the hybrid latex composition one or more neutralizers.

16. The method of claim 14 or 15, wherein the one or more neutralizers comprise one or more of: sodium hydroxide, ammonium hydroxide, an amine, a diamine, or a triamine.

17. The method according to claim 14 or 15, wherein the at least one neutralizer comprises one or more of: ammonium hydroxide, potassium hydroxide, sodium hydroxide, dimethylamine, diethylamine, aminopropanol, ammonium hydroxide, aminomethylpropanol, and 2-amino-2-methyl-1-propanol.

18. A method of adjusting the viscosity of a coating composition, comprising:

   providing the coating composition with the hybrid latex composition of any of claims 1 to 11, in an amount from about 35 to about 70 wt.%, with respect to the total coating composition; and
   neutralizing the resulting composition with at least one neutralizer in an amount sufficient to increase the viscosity.

19. A substrate coated with the coating composition of claim 12 or 13.


**Patentansprüche**

1. Hybridlatex-Zusammensetzung, erhältlich durch ein Verfahren, umfassend:

   das Lösen mindestens eines Alkydharzes mit einer Säurezahl von mindestens etwa 25 mÄqu. KOH/g in einem oder mehreren ethylenisch ungesättigten Monomer(en) unter Erhalt eines Alkyd/Monomer-Gemisches;
   das Dispergieren des Alkyd/Monomer-Gemisches in einem wässerigen Medium unter Bildung einer Voremulsion;
   das Anwenden von Scherung auf die Voremulsion unter Erhalt einer Miniemulsion mit einer durchschnittlichen Teilchengröße von etwa 25 nm bis etwa 500 nm und
   das Emulsionspolymerisieren der Miniemulsion mit Radikalkettenpolymerisation unter Erhalt eines Hybridlatex.

2. Hybridlatex-Zusammensetzung nach Anspruch 1, wobei das Alkydharz eine Säurezahl von etwa 25 bis etwa 100 mÄqu. KOH/g hat.

3. Hybridlatex-Zusammensetzung nach Anspruch 2, wobei das Alkydharz eine Säurezahl von etwa 30 bis etwa 100 mÄqu. KOH/g hat.

4. Hybridlatex-Zusammensetzung nach Anspruch 3, wobei das Alkydharz eine Säurezahl von etwa 35 bis etwa 75 mÄqu. KOH/g hat.

5. Hybridlatex-Zusammensetzung nach Anspruch 3, wobei das Alkydharz eine Säurezahl von etwa 30 bis etwa 50 mÄqu. KOH/g hat.

6. Hybridlatex-Zusammensetzung nach Anspruch 5, wobei das Alkydharz eine Säurezahl von etwa 35 bis etwa 45 mÄqu. KOH/g hat.

7. Hybridlatex-Zusammensetzung nach einem der Ansprüche 1 bis 6, wobei die Miniemulsion eine durchschnittliche Tröpfchengröße von etwa 25 nm bis etwa 500 nm hat.

8. Hybridlatex-Zusammensetzung nach Anspruch 7, wobei die Miniemulsion eine durchschnittliche Tröpfchengröße von etwa 50 nm bis etwa 400 nm hat.

9. Hybridlatex-Zusammensetzung nach Anspruch 8, wobei die Miniemulsion eine durchschnittliche Tröpfchengröße von etwa 100 nm bis etwa 300 nm hat.

10. Hybridlatex-Zusammensetzung nach einem der Ansprüche 1 bis 9, wobei das eine oder die mehreren ethylenisch ungesättigte(n) Monomer(e) eines oder mehrere von: Styrol, $\alpha$-Methylstyrol, Vinylnaphthalin, Vinyltoluol, Chlormethylstyrol, Methylacrylat, Acrylsäure, Methacrylsäure, Methylmethacrylat, Ethylacrylat, Ethylmethacrylat, Butylacrylat, Butylmethacrylat, Isobutylacrylat, Isobutylmethacrylat, Ethylhexylacrylat, Ethylhexylmethacrylat, Octylacrylat, Octylmethacrylat, Glycidylacrylat, Glycidylmethacrylat, Carbodiimidmethacrylat, ein Alkylcrotonat, Vinylacetat, Di-n-butylmaleat, Di-octylmaleat, t-Butylaminoethylmethacrylat, Dimethylaminoethylmethacrylat, Diethylaminoethylmethacrylat, N,N-Dimethylaminopropylmethacrylamid, 2-t-Butylaminoethylmethacrylat, N,N-Dimethylaminoethylacrylat, N-(2-Methacryloyloxy-ethyl)ethylenharnstoff und Methacrylamidoethylethylenharnstoff umfaßt/umfassen.

11. Hybridlatex-Zusammensetzung nach Anspruch 10, wobei das eine oder die mehreren ethylenisch ungesättigte(n) Monomer(e) eines oder mehrere von: Styrol, Acrylsäure, Methacrylsäure, Methylmethacrylat, Ethylacrylat, Ethylmethacrylat, Butylacrylat, Butylmethacrylat, Ethylhexylacrylat, Ethylhexylmethacrylat, Vinylacetat umfaßt/umfassen.

12. Beschichtungszusammensetzung, umfassend die Hybridlatex-Zusammensetzung nach einem der Ansprüche 1 bis 11.

13. Beschichtungszusammensetzung nach Anspruch 12, umfassend ein oder mehrere Polymer(e), das/die mit der Hybridlatex-Zusammensetzung kompatibel ist/sind.

14. Verfahren zur Erhöhung der Viskosität der Hybridlatex-Zusammensetzung nach einem der Ansprüche 1 bis 11, umfassend das Zugeben eines oder mehrerer Neutralisationsmittel zu der Hybridlatex-Zusammensetzung.

15. Verfahren zur Erhöhung der Viskosität der Beschichtungszusammensetzung nach Anspruch 12 oder 13, umfassend das Zugeben eines oder mehrerer Neutralisationsmittel zu der Hybridlatex-Zusammensetzung.

16. Verfahren nach Anspruch 14 oder 15, wobei das eine oder die mehreren Neutralisationsmittel eines oder mehrere von: Natriumhydroxid, Ammoniumhydroxid, einem Amin, einem Diamin oder einem Triamin umfaßt/umfassen.

17. Verfahren nach Anspruch 14 oder 15, wobei das mindestens eine Neutralisationsmittel eines oder mehrere von: Ammoniumhydroxid, Kaliumhydroxid, Natriumhydroxid, Dimethylamin, Diethylamin, Aminopropanol, Ammoniumhydroxid, Aminomethylpropanol und 2-Amino-2-methyl-1-propanol umfaßt.

18. Verfahren zur Einstellung der Viskosität einer Beschichtungszusammensetzung, umfassend:

    das Versehen der Beschichtungszusammensetzung mit der Hybridlatex-Zusammensetzung nach einem der Ansprüche 1 bis 11 in einer Menge von etwa 35 bis etwa 70 Gew.-%, bezogen auf die gesamte Beschichtungszusammensetzung; und
    das Neutralisieren der resultierenden Zusammensetzung mit mindestens einem Neutralisationsmittel in einer Menge, die zur Erhöhung der Viskosität ausreicht.

19. Substrat, beschichtet mit der Beschichtungszusammensetzung nach Anspruch 12 oder 13.

**Revendications**

1. Composition de latex hybride, obtenable par un procédé comprenant :

   la dissolution d'au moins une résine alkyde ayant un indice d'acide d'au moins environ 25 méq de KOH/g dans un ou plusieurs monomères éthyléniquement insaturés pour obtenir un mélange alkyde/monomère;
   la dispersion du mélange alkyde/monomère dans un milieu aqueux pour former une préémulsion;
   l'application d'un cisaillement à la préémulsion pour obtenir une miniémulsion ayant une taille de particule moyenne d'environ 25 nm à environ 500 nm; et
   la polymérisation en émulsion de la miniémulsion via une polymérisation radicalaire pour obtenir un latex hybride.

2. Composition de latex hybride suivant la revendication 1, dans laquelle la résine alkyde a un indice d'acide d'environ 25 à environ 100 méq de KOH/g.

3. Composition de latex hybride suivant la revendication 2, dans laquelle la résine alkyde a un indice d'acide d'environ 30 à environ 100 méq de KOH/g.

4. Composition de latex hybride suivant la revendication 3, dans laquelle la résine alkyde a un indice d'acide d'environ 35 à environ 75 méq de KOH/g.

**5.** Composition de latex hybride suivant la revendication 3, dans laquelle la résine alkyde a un indice d'acide d'environ 30 à environ 50 méq de KOH/g.

**6.** Composition de latex hybride suivant la revendication 5, dans laquelle la résine alkyde a un indice d'acide d'environ 35 à environ 45 méq de KOH/g.

**7.** Composition de latex hybride suivant l'une quelconque des revendications 1 à 6, dans laquelle la miniémulsion a une taille de gouttelette moyenne d'environ 25 nm à environ 500 nm.

**8.** Composition de latex hybride suivant la revendication 7, dans laquelle la miniémulsion a une taille de gouttelette moyenne d'environ 50 nm à environ 400 nm.

**9.** Composition de latex hybride suivant la revendication 8, dans laquelle la miniémulsion a une taille de gouttelette moyenne d'environ 100 nm à environ 300 nm.

**10.** Composition de latex hybride suivant l'une quelconque des revendications 1 à 9, dans laquelle le ou les plusieurs monomères éthyléniquement insaturés comprennent un ou plusieurs des composés suivants : styrène, α-méthyl styrène, vinyl naphtalène, vinyl toluène, chlorométhyl styrène, acrylate de méthyle, acide acrylique, acide méthacrylique, méthacrylate de méthyle, acrylate d'éthyle, méthacrylate d'éthyle, acrylate de butyle, méthacrylate de butyle, acrylate d'isobutyle, méthacrylate d'isobutyle, acrylate d'éthylhexyle, méthacrylate d'éthyl-hexyle, acrylate d'octyle, méthacrylate d'octyle, acrylate de glycidyle, méthacrylate de glycidyle, méthacrylate de carbodiimide, un crotonate d'alkyle, acétate de vinyle, maléate de di-n-butyle, maléate de di-octyle, méthacrylate de t-butylaminoéthyle, méthacrylate de diméthylamino-éthyle, méthacrylate de diéthylaminoéthyle, N,N-diméthylaminopropyl méthacrylamide, méthacrylate de 2-t-butylaminoéthyle, acrylate de N,N-diméthylaminoéthyle, N-(2-méthacryloylxyéthyl)éthylène urée et méthacrylamidoéthyléthylène urée.

**11.** Composition de latex hybride suivant la revendication 10, dans laquelle le ou les plusieurs monomères éthyléniquement insaturés comprennent un ou plusieurs des composés suivants : styrène, acide acrylique, acide méthacrylique, méthacrylate de méthyle, acrylate d'éthyle, méthacrylate d'éthyle, acrylate de butyle, méthacrylate de butyle, acrylate d'éthylhexyle, méthacrylate d'éthylhexyle, acétate de vinyle.

**12.** Composition de revêtement, comprenant la composition de latex hybride suivant l'une quelconque des revendications 1 à 11.

**13.** Composition de revêtement suivant la revendication 12, comprenant un ou plusieurs polymères qui sont compatibles avec la composition de latex hybride.

**14.** Procédé d'élévation de la viscosité de la composition de latex hybride suivant l'une quelconque des revendications 1 à 11, comprenant l'addition à la composition de latex hybride d'un ou plusieurs neutralisants.

**15.** Procédé d'élévation de la viscosité de la composition de revêtement suivant la revendication 12 ou 13, comprenant l'addition à la composition de latex hybride d'un ou plusieurs neutralisants.

**16.** Procédé suivant la revendication 14 ou 15, dans lequel le ou les plusieurs neutralisants comprennent un ou plusieurs des composés suivants : hydroxyde de sodium, hydroxyde d'ammonium, une amine, une diamine ou une triamine.

**17.** Procédé suivant la revendication 14 ou 15, dans lequel au moins le neutralisant comprend un ou plusieurs des composés suivants : hydroxyde d'ammonium, hydroxyde de potassium, hydroxyde de sodium, diméthylamine, diéthylamine, aminopropanol, hydroxyde d'ammonium, aminométhylpropanol et 2-amino-2-méthyl-1-propanol.

**18.** Procédé d'ajustement de la viscosité d'une composition de revêtement, comprenant :

la formation de la composition de revêtement avec la composition de latex hybride suivant l'une quelconque des revendications 1 à 11, en une quantité d'environ 35 à environ 70 % en poids, par rapport à la composition de revêtement totale; et
la neutralisation de la composition résultante avec au moins un neutralisant en une quantité suffisante pour élever la viscosité.

**19.** Substrat revêtu de la composition de revêtement suivant la revendication 12 ou 13.

## Figure 1

## Figure 2

Figure 3

## Figure 4

# Figure 5

Dynamic Viscosity - Stress Sweep
MMA/BA, Acid=1.25

pH=9

Legend: WR alkyd=15, WR alkyd=5, Example 20, Example 26

Y-axis: Viscosity (poise)
X-axis: Rate [s-1]

# Figure 6

Dynamic Viscosity - Stress Sweep - pH=9
Sty/EHA, Acid=5.0

# Figure 7

Dynamic Viscosity - Stress Sweep Sty/EHA

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4011388 A, Murphy
- US 4451596 A, Wilk
- US 4504609 A, Kuwajima
- US 5569715 A
- US 5786420 A, Grandhee
- US 5686518 A, Fontenot
- US 6242528 B, Clark
- US 6262149 B, Clark

- US 6333378 B, Clark
- US 6369135 B, Schork
- US 4698391 A
- US 4737551 A
- US 3345313 A
- US 5349026 A
- US 5371148 A

**Non-patent literature cited in the description**

- **S.T.WANG et al.** Emulsion and Miniemulsion Copolymerization of Acrylic Monomers in the Presence of Alkyd Resin. *JOURNAL OF APPLIED POLYMER SCIENCE,* 1996, vol. 60, 2069-2076
- McCutcheon's Emulsifiers & Detergents. MC Publishing Co, 1997

- Raw Materials Index. National Paint & Coatings Association
- Colour Index. Society of Dyers and Colourists, 1982